(19) Europäisches Patentamt
European Patent Office
Office européen des brevets

(11) EP 2 807 362 B1

## (12) EUROPÄISCHE PATENTSCHRIFT

(45) Veröffentlichungstag und Bekanntmachung des Hinweises auf die Patenterteilung:
22.11.2023  Patentblatt 2023/47

(21) Anmeldenummer: 12801721.7

(22) Anmeldetag: 05.12.2012

(51) Internationale Patentklassifikation (IPC):
F02D 41/14 (2006.01)     F02D 41/18 (2006.01)
F02D 41/22 (2006.01)

(52) Gemeinsame Patentklassifikation (CPC):
F02D 41/1454; F02D 41/1458; F02D 41/1495;
F02D 41/1461; F02D 41/1481; F02D 41/18;
F02D 41/222; F02D 2041/1432

(86) Internationale Anmeldenummer:
PCT/EP2012/074415

(87) Internationale Veröffentlichungsnummer:
WO 2013/110385 (01.08.2013 Gazette 2013/31)

(54) **VERFAHREN ZUR BESTIMMUNG EINER TOTZEIT EINES ABGASSENSORS EINER BRENNKRAFTMASCHINE**

METHOD FOR DETERMINING A DEAD TIME OF AN EXHAUST GAS SENSOR OF AN INTERNAL COMBUSTION ENGINE

MÉTHODE AFIN DE DÉTERMINER UN TEMPS-MORT D'UN CAPTEUR DE GAZ D'ÉCHAPPEMENT D'UN MOTEUR À COMBUSTION INTERNE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 25.01.2012  DE 102012201033

(43) Veröffentlichungstag der Anmeldung:
03.12.2014  Patentblatt 2014/49

(73) Patentinhaber: Robert Bosch GmbH
70442 Stuttgart (DE)

(72) Erfinder: MICHALSKE, Andreas
70806 Kornwestheim (DE)

(56) Entgegenhaltungen:
EP-A2- 1 074 718          DE-A1-102007 050 026
DE-A1-102008 040 737      DE-A1-102008 042 549
GB-A- 2 342 175

• TODD MESSER J ET AL: "Measurement Delays and Modal Analysis for a Heavy Duty Transportable Emissions Testing Laboratory", SAE TECHNICAL PAPER 950218,, 1. Januar 1995 (1995-01-01), Seiten 87-104, XP009168577,

EP 2 807 362 B1

**Beschreibung**

Stand der Technik

Die Erfindung betrifft ein Verfahren zur Bestimmung einer Totzeit $\tau_S$ im Ansprechverhalten eines Abgassensors zur Bestimmung einer Abgaszustandsgröße in einem Abgaskanal einer Brennkraftmaschine, wobei die Bestimmung der Totzeit $\tau_S$ aus einem gemessenen Ausgangssignal des Abgassensors oder einer daraus abgeleiteten gemessenen Kenngröße und einem Vergleichssignal oder einer daraus abgeleiteten Vergleichskenngröße erfolgt.

Im Rahmen der On-Board-Diagnose (OBD) zum Betrieb von Brennkraftmaschinen verlangen die OBDII-Bestimmungen, dass Lambdasonden und andere Abgassonden nicht nur bezüglich ihrer elektrischen Funktionstüchtigkeit überwacht werden, sondern auch hinsichtlich ihres Ansprechverhaltens. Eine Verschlechterung der Sonden-Dynamik, die sich durch eine vergrößerte Zeitkonstante oder durch eine verlängerte Totzeit $\tau_S$ bemerkbar machen kann, muss erkannt werden. Derartige Zeitverzögerungen zwischen einer Veränderung der Abgaszusammensetzung und deren Erkennung müssen on-board darauf geprüft werden, ob sie für die Anwenderfunktionen, d.h. für Steuer-, Regel- und Überwachungsfunktionen, die das Sensorsignal verwenden, noch zulässig sind. Als eine Kenngröße für die Dynamikeigenschaften von Abgassensoren wird typischerweise die Totzeit $\tau_S$ von einer Gemischänderung des der Brennkraftmaschine zugeführten Kraftstoff-Luft-Gemischs bis zur zugehörigen Signalflanke des Abgassensors verwendet. Die Totzeit $\tau_S$ ist vor allem durch die Gaslaufzeit vom Auslass der Brennkraftmaschine bis zum Abgassensor bestimmt und verändert sich beispielsweise bei einer Manipulation des Sensoreinbauortes.

Zur Einstellung eines der Brennkraftmaschine zugeführten Luft-/Kraftstoffgemischs werden üblicherweise Lambdasonden als Abgassensoren eingesetzt, welche den Sauerstoffgehalt des Abgases bestimmen. Bei Dieselmotoren können beispielsweise Lambdasonden in Form von Breitband-Lambdasonden eingesetzt werden. Weiterhin sind in Verbindung mit SCR-Katalysatoren (SCR: Selective Catalytic Reduction) zur Umsetzung von Stickoxiden mittels Harnstoff in Kohlendioxid, Stickstoff und Wasser $NO_x$-Sensoren vorgesehen. $NO_x$-Sensoren liefern zusätzlich ein Sauerstoff-Signal.

Die Totzeit $\tau_S$ des Sauerstoff-Signals wird nach bekannten Verfahren bei einem Übergang der Brennkraftmaschine von Last nach Schub überwacht. Dabei steigt der Sauerstoffanteil von einem durch den Betriebspunkt der Brennkraftmaschine unter Last vorgegebenen Anteil auf den Sauerstoffgehalt von Luft von 21 %. Erreicht das Sensorsignal nach einer Maximalzeit nicht einen vorgegebenen Zwischenwert, wird dies als Totzeitfehler interpretiert.

Für kommende Fahrzeuggenerationen bzw. Modelljahre ist zu erwarten, dass auch eine Überwachung der Sensordynamik bei fallender Sauerstoff-Konzentration gefordert wird. Außerdem wird es bei Hybridfahrzeugen künftig keine Schubphasen mehr geben und somit keine Phasen mit einer konstanten Sauerstoff-Konzentration von 21 %.

Ein Verfahren zu einer richtungsabhängigen Totzeitüberwachung ist in der Schrift DE 10 2008 001 121 A1 beschrieben. Die Schrift offenbart ein Verfahren zur Diagnose mindestens einer im Abgassystem einer Brennkraftmaschine angeordneten Abgassonde, bei dem eine Signaländerung mit einer erwarteten Signaländerung verglichen wird. Dabei ist es vorgesehen, dass ein besonderer Betriebszustand der Brennkraftmaschine erkannt wird und dass in diesem besonderen Betriebszustand der Brennkraftmaschine zur Diagnose eine Testeinspritzung, die momentenneutral oder für den Betreiber der Brennkraftmaschine nicht störend ist, erfolgt. Ein besonderer Betriebszustand kann dabei eine Schubphase der Brennkraftmaschine sein. Die Bestimmung der Totzeit $\tau_S$ kann durch Ermittlung einer Ist-Verzögerungszeit aus dem Zeitverzug, bis das Signal der Abgassonde der Änderung der Abgaszusammensetzung folgt, und Vergleichen der Ist-Verzögerungszeit mit einer abgespeicherten oder berechneten Soll-Verzögerungszeit erfolgen. Nachteilig hierbei ist, dass die aktive Überwachung einen Eingriff in das Kraftstoffsystem der Brennkraftmaschine darstellt und dadurch sowohl der Kraftstoffverbrauch wie auch der $CO_2$-Ausstoß erhöht werden.

Zur Bestimmung von Totzeiten ist außerhalb der Motorensteuerung das Prinzip der Kreuzkorrelation bekannt. Das Prinzip ist beispielsweise in "The Generalized Correlation Method for Estimation of Time Delay", IEEE Transactions on Acoustics, Speech, and Signal Processing, Vol. ASSP-24, No. 4, August 1976 von C. H. Knapp und G.C. Carter beschrieben. Ein erstes und ein zweites zu vergleichendes Signal, welche beide von einer gleichen Ursache ausgelöst werden, werden danach zunächst gefiltert. Anschließend wird das zweite Signal um eine Verzögerungszeit zeitlich verzögert. Die so erhaltenen Signale werden entsprechend einer Kreuzkorrelationsfunktion miteinander multipliziert und über einen vorgegebenen Zeitraum integriert. Ein nachfolgend angeordneter Peakdetector variiert die Verzögerungszeit derart, bis ein Maximum der Kreuzkorrelationsfunktion, also des multiplizierten und integrierten Signals, vorliegt. Die Verzögerungszeit beim Maximum entspricht der Totzeit $\tau$ zwischen dem ersten und dem zweiten Signal. Totzeitmessungen durch Kreuzkorrelation werden beispielsweise in der Laserentfernungsmessung oder in der Radartechnik eingesetzt, um die Entfernung eines Objektes zu ermitteln.

Zum Stand der Technik gehören ferner die Veröffentlichung "TODD MESSER J ET AL:"Measurement Delays and Modal Analysis for a Heavy Duty Transportable Emissions Testing Laboratory", SAE TECHNICAL PAPER 950218, 1. Januar 1995 (1995-01-01), Seiten 87-104" sowie die Offenlegungsschriften DE 10 2008 042 549 A1 sowie DE 10 2007 050 026 A1 der Anmelderin.

Es besteht die Aufgabe, ein Verfahren zur Überwachung der Totzeit $\tau_S$ von Abgassonden, welche im Abgaskanal einer Brennkraftmaschine angeordnet sind, bereitzustellen.

**Offenbarung der Erfindung**

Die Aufgabe wird durch das Verfahren gemäß Anspruch 1 gelöst. Die Totzeit $\tau_S$ ist vor allem durch die Gaslaufzeit von der Brennkraftmaschine zu dem Abgassensor bestimmt. Das unverzögerte Vergleichssignal oder die daraus abgeleitete unverzögerte Vergleichskenngröße entspricht dem unverzögerten Verlauf der Abgaszustandsgröße vorzugsweise am Auslass der Brennkraftmaschine. Die Modelltotzeit $\tau_M$ wird beispielsweise iterativ so lange verändert, bis das gemessene Ausgangssignal und das entsprechend der Modelltotzeit $\tau_M$ verzögerte Vergleichssignal oder die daraus abgeleiteten Kenngrößen möglichst deckungsgleich sind. Die Modelltotzeit $\tau_M$ entspricht dann in guter Näherung der Totzeit $\tau_S$ des Abgassensors. Das Maß für die Deckungsgleichheit beziehungsweise Ähnlichkeit der Signale ist ihre Kreuzkorrelationsfunktion, die bei bestmöglicher Überdeckung ihr Maximum annimmt.

Das Verfahren ermöglicht ein einheitliches Überwachungsprinzip sowohl für die Zunahme wie für die Abnahme der zu messenden Abgaszustandsgröße, beispielsweise einer Gaskonzentration. Dabei handelt es sich um ein passives Verfahren, welches keinen Eingriff in das Luft- oder Kraftstoffsystem der Brennkraftmaschine erfordert. Da das Verfahren nicht an besondere Betriebspunkte der Brennkraftmaschine gebunden ist, ergibt sich eine hohe Verfügbarkeit. Weitere Vorteile des Verfahrens sind die hohe Robustheit gegenüber Störungen sowie die geringe Komplexität des Verfahrens mit einem entsprechend geringen Applikationsaufwand in der Umsetzung. Fehlmessungen auf Grund falscher Flankenzuordnungen bezüglich Ursache (Änderung der Abgaszustandsgröße) und Wirkung (Ausgangssignal des Abgassensors) können durch eine ausreichend große Integrationsdauer und nicht-periodische Anregung zuverlässig unterbunden werden.

Eine einfache und beispielsweise durch eine Softwareerweiterung in einer vorhandenen Steuereinheit kostengünstig umsetzbare Bestimmung eines geeigneten unverzögerten Vergleichssignals oder einer daraus abgeleiteten unverzögerten Vergleichskenngröße kann dadurch erreicht werden, dass das unverzögerte Vergleichssignal oder die daraus abgeleitete unverzögerte Vergleichskenngröße modelliert wird. Dazu kann zunächst die zu bestimmende Abgaszustandsgröße, beispielsweise an einem Auslass der Brennkraftmaschine, modelliert und daraus das unverzögerte Vergleichssignal beziehungsweise die daraus abgeleitete Vergleichskenngröße bestimmt werden.

Das Dynamikverhalten des Abgassensors wird erfindungsgemäß bei der Bestimmung des Vergleichssignals, beispielsweise durch eine entsprechende Modellierung, dadurch nachgebildet, dass vor der Bildung der Kreuzkorrelation eine Tiefpassfilterung des Vergleichssignals oder der daraus abgeleiteten Vergleichskenngröße durchgeführt wird.

Weiterhin wird erfindungsgemäß die Trennschärfe der Totzeitmessung dadurch gesteigert, dass vor der Bildung der Kreuzkorrelation eine Hochpassfilterung des gemessenen Ausgangssignals oder der daraus abgeleiteten gemessenen Kenngröße und des Vergleichssignals oder der daraus abgeleiteten Vergleichskenngröße durchgeführt wird. Durch die Hochpassfilterung werden nur die dynamischen Phasen beim Signalvergleich berücksichtigt.

Die Hochpassfilterung des gemessenen Ausgangssignals beziehungsweise der daraus abgeleiteten gemessenen Kenngröße kann durch einen Hochpass erfolgen. Die Tiefpassfilterung und die Hochpassfilterung des Vergleichssignals beziehungsweise der Vergleichskenngröße kann vorteilhaft durch einen entsprechenden Bandpass erfolgen. Das Tiefpassverhalten des realen Abgassensors und der nachgeschaltete Hochpass ergeben ebenfalls das Verhalten eines Bandpasses. Der Hochpass und der Hochpassanteil des Bandpasses besitzen vorteilhaft eine gleiche Grenzfrequenz, die unterhalb der Grenzfrequenz der Tiefpassfilterung liegt.

Entsprechend einer besonders bevorzugten Ausgestaltungsvariante der Erfindung kann es vorgesehen ein, dass eine Sondenzeitkonstante Ts des Abgassensors bestimmt wird und dass eine Tiefpass-Filterzeitkonstante $\tau_M$ der Tiefpassfilterung der Sondenzeitkonstante Ts gleichgesetzt wird. Die Sondenzeitkonstante Ts beschreibt die Dynamik, mit der der Abgassensor auf eine Änderung der zu bestimmenden Abgaszustandsgröße reagiert. Ein Verfahren zur Bestimmung der Sondenzeitkonstante $T_S$ ist beispielsweise in der noch nicht veröffentlichten Schrift R. 339892 der Anmelderin beschrieben. Durch die Anpassung der Tiefpass-Filterzeitkonstante $T_M$ an die Sondenzeitkonstante Ts des vorliegenden Abgassensors kann die aktuelle Dynamik des Abgassensors berücksichtigt werden. Die Bestimmung der Totzeit $\tau_S$ wird dadurch nicht von einem beispielsweise infolge einer Verrußung verlangsamten Abgassensor verfälscht.

Bevorzugt kann als Kreuzkorrelationsfunktion eine normierte Energie-Kreuzkorrelationsfunktion oder das Quadrat einer normierten Energie-Kreuzkorrelationsfunktion verwendet werden. Dabei enthält die Kreuzkorrelationsfunktion im Nenner die Signalenergien des gemessenen Ausgangssignals und des Vergleichssignals nach Frequenzfilterung und im Zähler die Kreuzenergie der Signale. Durch die Verwendung der normierten Kreuzenergie werden multiplikative Fehler des Abgassensors oder bei der Bildung des Vergleichssignals sowie der Einfluss des Signalhubs der Anregung, also der Änderung der zu bestimmenden Abgaszustandsgröße, eliminiert.

Entsprechend einer bevorzugten Ausgestaltungsvariante der Erfindung kann es vorgesehen sein, dass ein Integrationszeitraum T bei der Berechnung der Energie-Kreuzkorrelationsfunktion eine oder mehrere Flanken einer Änderung der Abgaszustandsgröße umfasst. Umfasst der Integrationszeitraum T nur eine Flanke, so ist das Diagnoseergebnis automatisch richtungsselektiv, d.h., es werden positive und negative Änderungen der Abgaszustandsgröße separat ausgewertet. Werden durch einen entsprechend langen Integrationszeitraum mehrere Flanken einer Änderung der Abgaszustandsgröße erfasst, so lässt sich die Genauigkeit bei der Bestimmung der Totzeit $\tau_S$ verbessern.

Dabei kann es vorgesehen sein, dass der Integrationszeitraum T zeit- oder ereignisgesteuert beginnt. Ein ereignisgesteuerter Beginn des Integrationszeitraums T kann beispielsweise an eine Flanke einer Änderung der Abgaszustandsgröße oder an eine Flanke einer Einspritzmenge gebunden sein. Beginnt der Integrationszeitraum T an einer Flanke einer Änderung der Abgaszustandsgröße, so kann der Start auf die früher vorliegende Flanke des gemessenen Ausgangssignals oder des Vergleichssignals beziehungsweise der daraus abgeleiteten Kenngrößen gesetzt werden.

Um eine richtungsselektive Bestimmung der Totzeit $\tau_S$ mit hoher Genauigkeit zu erreichen kann es vorgesehen sein, dass positive und negative Flanken einer Änderung der Abgaszustandsgröße getrennt ausgewertet werden. Der Integrationszeitraum T kann sich dann über mehrere Flanken erstrecken.

Die richtungsselektive Bestimmung der Totzeit $\tau_S$ kann dadurch erreicht werden, dass eine getrennte Auswertung positiver und negativer Flanken durch eine Hochpassfilterung und nachgeschaltete Sättigungsglieder erfolgt. Damit wird erreicht, dass entweder nur positive oder nur negative Signalanteile durchgelassen werden, wodurch sich eine Diodenfunktion ergibt.

Entsprechend einer weiteren Ausführungsvariante der Erfindung kann es vorgesehen sein, dass zur Bestimmung des Maximums der Kreuzkorrelation ein Volumenwert des Abgaskanals zwischen der Brennkraftmaschine und dem Einbauort des Abgassensors derart variiert wird, dass die Kreuzkorrelationsfunktion ein Maximum annimmt. Die Totzeit $\tau_S$ entspricht, sofern keine elektrische Manipulation vorliegt, einer Gaslaufzeit von der Brennkraftmaschine bis zum Abgassensor. Die Gaslaufzeit hängt von dem Abgasvolumenstrom und von dem Volumen der Abgasanlage zwischen der Brennkraftmaschine und dem Einbauort des Abgassensors ab. Durch rechnerische Variation des für das Volumen der Abgasanlage angenommenen Volumenwertes kann die Gaslaufzeit zur Verzögerung des Vergleichssignals derart variiert werden, dass das gemessene Ausgangssignal und das Vergleichssignal deckungsgleich sind. Der so erhaltene Volumenwert kann unter Berücksichtigung des Volumenstroms in eine Totzeit $\tau_S$ umgerechnet werden.

Die die Steuereinheit betreffende Aufgabe der Erfindung wird dadurch gelöst, dass die Steuereinheit Mittel zur Bestimmung eines unverzögerten Vergleichssignals oder zur Ermittlung einer daraus abgeleiteten unverzögerten Vergleichskenngröße enthält, dass in der Steuereinheit ein Programmablauf oder eine elektronische Schaltung zur Bildung einer Kreuzkorrelation zwischen dem gemessenen Ausgangssignal oder der daraus abgeleiteten gemessenen Kenngröße und dem um eine Modelltotzeit $\tau_M$ verzögerten Vergleichssignal oder der daraus abgeleiteten Vergleichskenngröße enthält und dass die Steuereinheit eine Maximalwerterkennung zur Variation der Modelltotzeit $\tau_M$ und zur Erkennung eines Maximums der Kreuzkorrelationsfunktion bei einer Modelltotzeit $\tau_M$ enthält. Eine derartige Steuereinheit ermöglicht die Durchführung des beschriebenen Verfahrens. Die Umsetzung in einer bestehenden Steuereinheit ist dabei einfach und kostengünstig, beispielsweise durch eine entsprechende Softwareerweiterung, möglich.

Das Verfahren oder die Steuereinheit lassen sich bevorzugt zur Bestimmung einer Totzeit $\tau_S$ im Ansprechverhalten einer Breitband-Lambdasonde oder eines $NO_x$-Sensors einsetzen. Dabei reagieren sowohl die Breitband-Lambdasonde wie auch der $NO_x$-Sensor auf eine Änderung des Sauerstoffgehalts als Abgaszustandsgröße des Abgases. Das Verfahren kann auch auf das $NO_x$-Signal eines $NO_x$-Sensors angewendet werden, wenn ein entsprechendes $NO_x$-Vergleichssignal gebildet werden kann, etwa durch ein $NO_x$-Modell.

Ein bevorzugte Anwendung des Verfahrens und der Steuereinheit mit ihren zuvor beschrieben Varianten sieht den Einsatz bei Hybrid-Fahrzeugen, z.B. Diesel-Hybrid-Fahrzeugen, vor, welche keine Leerlauf-Betriebsphasen oder Schub-Phasen aufweisen. Besonders hervorzuheben ist, dass die Anwendung bei Hybrid-Fahrzeugen das Verbrauchs- und $CO_2$-Reduktionspotential nicht schmälert, da weder Testeinspritzungen nötig sind noch spezielle Motorbetriebszustände angefordert werden müssen.

Eine weitere bevorzugte Anwendung des Verfahrens und der Steuereinheit mit ihren zuvor beschrieben Varianten sieht den Einsatz bei Fahrzeugen vor, die einen sogenannten Segelbetrieb aufweisen. Bei derartigen Fahrzeugen entfällt der Schubbetrieb ebenfalls weitestgehend. Statt den Motor im Schub zu schleppen, wird beim Segelbetrieb die Kupplung geöffnet, der Motor geht in den Leerlauf oder wird abgestellt und das Fahrzeug rollt aufgrund seiner Trägheit. Auch hierbei ergeben sich erhebliche Verbrauchs- und $CO_2$-Reduktionspotentiale.

Die Erfindung wird im Folgenden anhand der Figuren näher erläutert. Es zeigen:

Figur 1 in schematischer Darstellung das technische Umfeld, in dem das erfindungsgemäße Verfahren angewendet werden kann,

Figur 2 ein vom Erfindungsgegenstand abweichendes Blockdiagramm zur Bestimmung der Totzeit $\tau_S$ eines Abgassensors,

Figur 3 ein vom Erfindungsgegenstand abweichendes Blockdiagramm zur modellbasierten Totzeitdiagnose von Sauerstoffsensoren,

Figur 4 ein Ausführungsbeispiel der Erfindung; ein Blockdiagramm zur richtungsselektiven Überwachung der Totzeit

$\tau_S$ eines Abgassensors und

Figur 5 ein vom Erfindungsgegenstand abweichendes Blockdiagramm zur Bestimmung der Totzeit $\tau_S$ eines Abgassensors nach einem alternativen Auswerteverfahren.

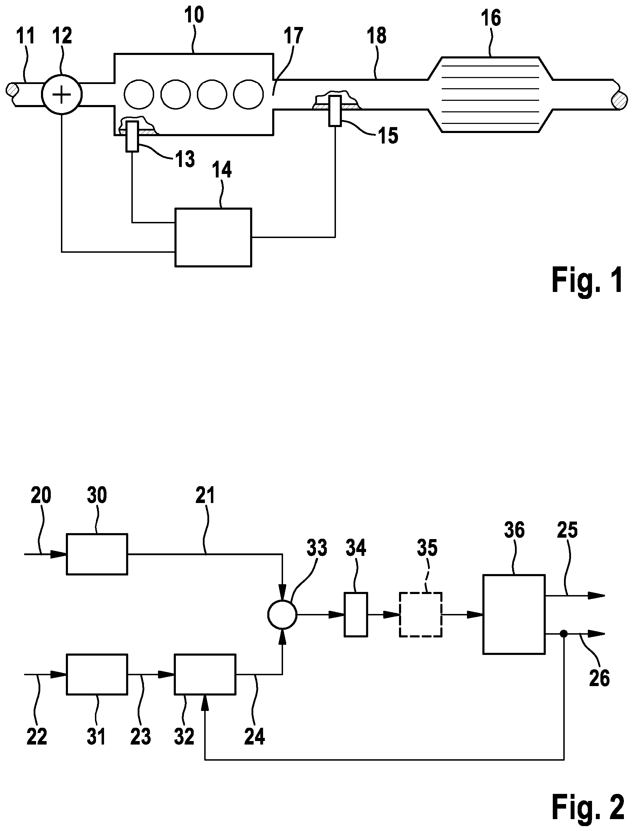

Figur 1 zeigt schematisch an einem Beispiel eines Otto-Motors das technische Umfeld, in dem das erfindungsgemäße Verfahren zur Bestimmung einer Totzeit $\tau_S$ im Ansprechverhalten eines Abgassensors 15 eingesetzt werden kann. Einer Brennkraftmaschine 10 wird Luft über eine Luftzuführung 11 zugeführt und deren Masse mit einem Luftmassenmesser 12 bestimmt. Der Luftmassenmesser 12 kann als Heißfilm-Luftmassenmesser ausgeführt sein. Das Abgas der Brennkraftmaschine 10 wird über einen Auslass 17 der Brennkraftmaschine 10 in einen Abgaskanal 18 abgeführt, wobei in Strömungsrichtung des Abgases der Abgassensor 15 und eine Abgasreinigungsanlage 16 vorgesehen sind. Die Abgasreinigungsanlage 16 umfasst üblicherweise mindestens einen Katalysator.

Zur Steuerung der Brennkraftmaschine 10 ist eine Steuereinheit 14 vorgesehen. Die Steuereinheit 14 ist mit dem Abgassensor 15, dem Luftmassenmesser 12 und der Kraftstoffdosierung 13 verbunden.

Im Betrieb der Brennkraftmaschine 10 regelt die Steuereinheit 14 die Kraftstoff- und Luftzufuhr der Brennkraftmaschine in Abhängigkeit von der geforderten Last. Dabei werden Messsignale des Abgassensors 15 und des Luftmassenmessers 12 berücksichtigt. Die Zuführung des Kraftstoffs zu der Brennkraftmaschine 10 erfolgt über die Kraftstoffdosierung 13, die Regelung der Luftzufuhr über eine nicht dargestellte Drosselklappe in der Luftzuführung 11. Der Abgassensor 15 ist in dem gezeigten Ausführungsbeispiel eine Breitband-Lambdasonde und bestimmt einen Lambda-Istwert des der Brennkraftmaschine 10 zugeführten Kraftstoff-Luft-Gemischs.

Gesetzliche Bestimmungen zur On-Board-Diagnose (OBD) schreiben die Überwachung von Abgassonden 15 hinsichtlich ihres Ansprechverhaltens vor. Tot- oder Verzögerungszeiten zwischen einer Veränderung der Abgaszusammensetzung und deren Erkennung müssen darauf geprüft werden, ob sie für die Anwenderfunktionen noch zulässig sind. Die Totzeit $\tau_S$ ist vor allem durch die Laufzeit des Abgases von dem Auslass 17 der Brennkraftmaschine 10 bis zum Einbauort des Abgassensors 15 bestimmt und ändert sich beispielsweise bei einer Manipulation des Einbauortes des Abgassensors 15.

Figur 2 zeigt in einem Blockdiagramm eine Grundstruktur einer Schaltungsanordnung oder einer Softwarefunktion zur Bestimmung der Totzeit $\tau_S$ des in Figur 1 gezeigten Abgassensors 15. Dabei wird eine auf die Anwendung zugeschnittene Kreuzkorrelationsmethode eingesetzt.

Ein gemessenes Ausgangssignal $x_1(t)$ 20 des Abgassensors 15 wird einem ersten Hochpassfilter 30 zugeführt. Ein gefiltertes Ausgangssignal $y_1(t)$ 21 wird zu einem ersten Multiplizierer 33 geleitet.

Ein unverzögertes Vergleichssignal $x_2(t)$ 22 wird einem Bandpassfilter 31 zugeführt, der daraus ein gefiltertes Vergleichssignal $y_2(t)$ 23 bildet. Das gefilterte Vergleichssignal $y_2(t)$ 23 wird in einem Totzeitglied 32 zeitlich verzögert, so dass sich ein verzögertes Vergleichssignal $y_2(t-\tau)$ 24 ergibt. Das verzögerte Vergleichssignal $y_2(t-\tau)$ 24 wird ebenfalls dem ersten Multiplizierer 33 zugeführt und dort mit dem gefilterten Ausgangssignal $y_1(t)$ 21 multipliziert. Das so erhaltene Signal wird nacheinander einem ersten Integrator 34, einem optional vorgesehenen Quadrierer 35 und anschließend einer Maximalwerterkennung 36 zugeführt. Die Maximalwerterkennung 36 gibt als Ergebnis der Kreuzkorrelation eine normierte Kreuzenergie 25 oder deren Quadrat und eine Modelltotzeit $\tau_M$ 26 aus, welche zu dem Totzeitglied 32 geleitet wird. Der Quadrierer 35 ist vorteilhaft für die Maximalwerterkennung, aber nicht zwingend erforderlich. Für die weitere Beschreibung der Funktion wird daher von der Ausgabe der normierten Kreuzenergie 25 ausgegangen, für die jedoch gleichbedeutend auch das Quadrat der normierten Kreuzenergie verwendet werden kann.

Das gemessene Ausgangssignal $x_1(t)$ 20 des zu überwachenden Abgassensors 15 entspricht einer von dem Abgassensor 15 bestimmten Abgaszustandsgröße, beispielsweise einer Sauerstoffkonzentration, am Einbauort des Abgassensors. Das unverzögerte Vergleichssignal $x_2(t)$ 22 entspricht dem Verlauf der Abgaszustandsgröße am Auslass 17 der Brennkraftmaschine 10. Das unverzögerte Vergleichssignal $x_2(t)$ 22 kann beispielsweise durch ein geeignetes Modell berechnet werden. So lässt sich eine Sauerstoffkonzentration am Auslass 17 der Brennkraftmaschine aus der gemessenen Luftmasse und der über die Kraftstoffdosierung 13 zugeführte Soll-Kraftstoffmasse berechnen.

Der Bandpassfilter 31 beinhaltet einen Tiefpassanteil, der das Dynamikverhalten des Abgassensors 15 nachbildet. Der in dem Bandpassfilter 31 enthaltene Hochpassanteil sowie der erste Hochpassfilter 30 im Signalverlauf der Abgassonde 15 dienen dazu, die Trennschärfe der Totzeitmessung zu steigern, indem nur dynamische Phasen des zeitlichen Verlaufs der Abgaszustandsgröße beim nachfolgenden Signalvergleich berücksichtigt werden. Der erste Hochpassfilter 30 und der Hochpassanteil des Bandpassfilters 31 besitzen eine einheitliche Grenzfrequenz und einen Durchlassbereich, der sich mit dem des Tiefpassfilters überlappt. Bei steilflankigen Hoch- und Tiefpässen muss die Hochpass-Grenzfrequenz dafür unterhalb der Tiefpass-Grenzfrequenz liegen.

Durch das Totzeitglied 32 wird das gefilterte Vergleichssignal $y_2(t)$ 23 um die von der Maximalwerterkennung 36 ausgegebene Modelltotzeit $\tau_M$ 26 verzögert, so dass sich das verzögerte Vergleichssignal $y_2(t-\tau)$ 24 ergibt. Die Kreuzkorrelation erfolgt durch den ersten Multiplizierer 33, den ersten Integrator 34 und den optional vorgesehenen ersten Quadrierer 35. Dabei wird die Kreuzenergie des gefilterten Ausgangssignals $y_1(t)$ 21 und des gefilterten Vergleichssignal $y_2(t)$ 23 auf die Signalenergien des gefilterten Ausgangssignals $y_1(t)$ 21 und des gefilterten Vergleichssignal

$y_2(t)$ 23 bezogen.

Die Maximalwerterkennung 36 verändert die Modelltotzeit $\tau_M$ 26 des Totzeitglieds 32 vorzugsweise iterativ, bis das gefilterte Ausgangssignal $y_1(t)$ 21 und das verzögerte Vergleichssignal $y_2(t-\tau)$ 24 möglichst deckungsgleich sind. Die Modelltotzeit $\tau_M$ 26 entspricht dann in guter Näherung der zu bestimmenden Totzeit $\tau_S$ des Abgassensors 15. Das Maß für die Deckungsgleichheit beziehungsweise Ähnlichkeit des gefilterten Ausgangssignals $y_1(t)$ 21 und des verzögerten Vergleichssignals $y_2(t-\tau)$ 24 ist ihre über die Kreuzkorrelationsfunktion erhaltene Kreuzenergie $E_{KK}$, die bei bestmöglicher Überdeckung ihr Maximum annimmt.

Bei Verwendung des optionalen Quadrierers 35 kann auch das Quadrat der Kreuzenergie als Ähnlichkeitsmaß verwendet werden, da das Quadrieren die Lage des Maximums nicht verändert.

Um die Modelltotzeit schrittweise anzupassen, kann dieselbe Messung mehrmals ausgewertet werden. Hierfür müssen die Messung und das unverzögerte Vergleichssignal für eine zweckmäßige Zeitdauer aufgezeichnet werden. Ebenso ist es beispielsweise möglich, Messung und Auswertung für verschiedene Anregungen bei unterschiedlichen Modelltotzeiten durchzuführen. In einer alternativen Ausführungsform kann die Auswertung für unterschiedliche Modelltotzeiten auch parallelisiert werden, indem Teile des Blockdiagramms nach Figur 2 mehrfach ausgeführt werden.

Das beschriebene Verfahren ermöglicht eine einfache Bestimmung der Totzeit $\tau_S$ der Abgassonde 15 mit einem einheitlichen Überwachungsprinzip für eine Zunahme und eine Abnahme der zu messenden Abgaszustandsgröße. Es handelt sich dabei um ein passives Verfahren, welches keinen Eingriff in die Luft- oder Kraftstoffsysteme der Brennkraftmaschine 10 erfordert. Es ist auch anwendbar bei Fahrzeugen, die keine oder nur wenige Schub- und Leerlaufphasen aufweisen, beispielsweise bei Hybridfahrzeugen. Weitere Vorteile sind eine hohe Verfügbarkeit in relevanten Zertifizierungszyklen, eine hohe Robustheit gegenüber Störungen, vermeidbare Gefahr von Fehlmessungen aufgrund falscher Flankenzuordnung von Ursache (Änderung der Abgaszustandsgröße) und Wirkung (Ausgangssignal des Abgassensors) sowie die geringe Komplexität und ein geringer Applikationsaufwand.

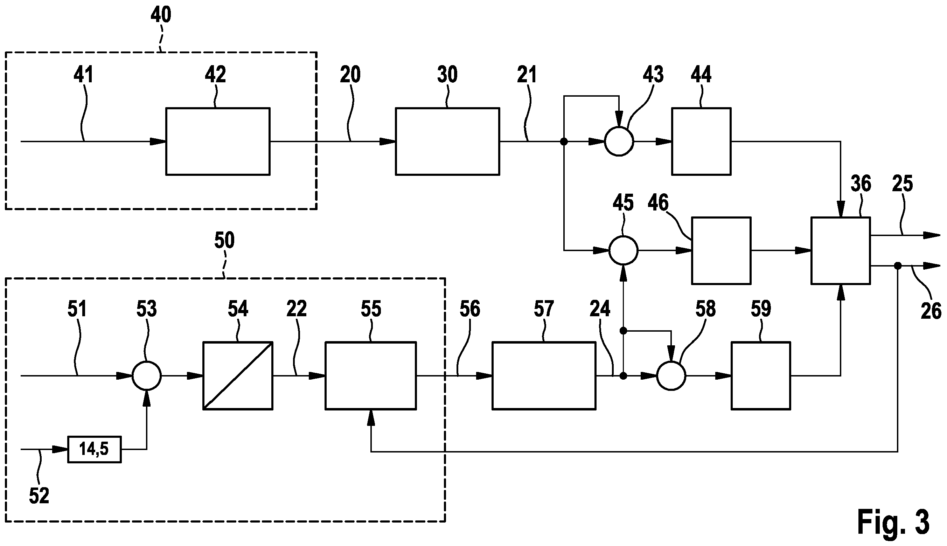

Figur 3 zeigt ein Blockdiagramm zur modellbasierten Totzeitdiagnose von Sauerstoffsensoren in Ausführung einer Breitband-Lambdasonde als Abgassensor 15. Das Ansprechverhalten der Breitband-Lambdasonde ist dabei durch ein reales System 40 dargestellt. Ein Modell 50 liefert das benötigte Vergleichssignal.

In dem realen System 40 wird eine in dem Abgas an dem Auslass 17 der Brennkraftmaschine 10 vorliegende Sauerstoffkonzentration 41 entsprechend einer Sondenverzögerung 42 der Breitband-Lambdasonde in das gemessene Ausgangssignal $x_1(t)$ 20 umgewandelt. Aus dem gemessenen Ausgangssignal $x_1(t)$ 20 wird durch den ersten Hochpassfilter 30 das gefilterte Ausgangssignal $y_1(t)$ 21 gebildet. Das gefilterte Ausgangssignal $y_1(t)$ 21 wird einem zweiten Multiplizierer 43 und einem dritten Multiplizierer 45 zugeführt. Nach dem zweiten Multiplizierer 43 ist ein zweiter Integrator 44 und anschließend die Maximalwerterkennung 36 angeordnet.

In dem Modell 50 wird eine Luftmasse 51 und eine Kraftstoffmasse 52 einer ersten Divisionseinheit 53 und ein dort gebildeter Lambdawert einer Umrechnungseinheit 54 zugeführt. Die Umrechnungseinheit 54 bildet das in Figur 2 gezeigte unverzögerte Vergleichssignal $x_2(t)$ 22 in Form eines berechneten Sauerstoffgehalts, welches einem Verzögerungsglied 55 zugeführt ist. Ein darin gebildeter modellierter Sauerstoffgehalt 56 ist einem zweiten Hochpassfilter 57 zugeführt. Das erhaltene verzögerte Vergleichssignal $y_2(t-\tau)$ 24 ist an den dritten Multiplizierer 45 und einen vierten Multiplizierer 58 geleitet. Dem vierten Multiplizierer 58 folgen ein vierter Integrator 59 und die Maximalwerterkennung 36.

Nach dem dritten Multiplizierer 45 ist ein dritter Integrator 46 und anschließend die Maximalwerterkennung 36 vorgesehen. Die Maximalwerterkennung 36 liefert als Ausgangssignale als Ergebnis der Kreuzkorrelation die normierte Kreuzenergie 25 und eine Modelltotzeit $\tau_M$ 26, welche dem Verzögerungsglied 55 zugeführt ist.

Das reale System 40 entspricht der realen Breitband-Lambdasonde. Das Ansprechverhalten der Breitband-Lambdasonde bei einer vorliegenden Sauerstoffkonzentration 41 am Auslass 17 der Brennkraftmaschine 10 kann entsprechend der Übertragungsfunktion

$$G_S(j\omega) = \frac{1}{1 + j\omega T_S} \cdot e^{-j\omega \tau_S} \qquad\qquad (1)$$

durch eine Totzeit $\tau_S$ und einen Tiefpassfilter 1. Ordnung mit einer Sonden-Zeitkonstante $T_S$ beschrieben werden. Die Totzeit $\tau_S$ ist im Wesentlichen durch die Gaslaufzeit von dem Auslass 17 der Brennkraftmaschine 10 bis zur Breitband-Lambdasonde gegeben. Die Sonden-Zeitkonstante $T_S$ beschreibt die Dynamik der Breitband-Lambdasonde. Das gemessene Ausgangssignal $x_1(t)$ 20 entspricht dem Ausgangssignal der Breitband-Lambdasonde.

Das Vergleichssignal wird mit Hilfe des Modells 50 gebildet. Aus der der Bennkraftmaschine 10 zugeführten Luftmasse 51 und Kraftstoffmasse 52 wird nach stöchiometrischer Korrektur in der ersten Divisionseinheit 53 ein Lambdawert berechnet. Die Kraftstoffmasse 52 kann sich aus dem Drehmomentwunsch ergeben, den der Fahrer vorgibt. In einer Umrechnungseinheit 54 wird aus dem Lambdawert ein kalkulierter Sauerstoffgehalt am Auslass 17 der Brennkraftmaschine 10 bestimmt. Der kalkulierte Sauerstoffgehalt entspricht dem unverzögerten Vergleichssignal $x_2(t)$ 22. Entsprechend dem realen System 40 wird aus dem unverzögerten Vergleichssignal $x_2(t)$ 22 gemäß einer Übertragungs-

funktion

$$G_M(j\omega) = \frac{1}{1 + j\omega T_M} \cdot e^{-j\omega\tau_M} \qquad (2)$$

der modellierte Sauerstoffgehalt 56 gebildet, wobei $\tau$ die Modelltotzeit $\tau_M$ 26 und $T_M$ eine Modell-Zeitkonstante darstellt. Der modellierte Sauerstoffgehalt 56 ist gegenüber dem unverzögerten Vergleichssignal $x_2(t)$ 22 um die Modelltotzeit $\tau_M$ 26 verzögert. Die Modell-Zeitkonstante $T_M$ ist vorzugsweise gleich dem Istwert der Sonden-Zeitkonstante $T_S$ der Breitband-Lambdasonde gewählt. Dadurch ergibt sich gegenüber einer fest eingestellten Zeitkonstante der Vorteil, dass die Totzeitdiagnose beispielsweise durch eine infolge einer Verrußung verlangsamten Abgassonde 15 nicht verfälscht wird. Die Sonden-Zeitkonstante $T_S$ kann beispielsweise nach einem Verfahren, wie es in der noch nicht veröffentlichten Schrift R.339892 der Anmelderin beschrieben ist, bestimmt werden.

Das gemessene Ausgangssignal $x_1(t)$ 20 und das Signal für den modellierten Sauerstoffgehalt 56 werden jeweils in einem Hochpassfilter 30, 57 gefiltert. Die Hochpassfilter 30, 57 weisen entsprechend der folgenden Übertragungsfunktion die gleiche Hochpass-Filterzeitkonstante $T_F$ auf:

$$G_F(j\omega) = \frac{j\omega T_F}{1 + j\omega T_F} \qquad (3)$$

Dadurch ergeben sich das gefilterte Ausgangssignal $y_1(t)$ 21 und das verzögerte Vergleichssignal $y_2(t-\tau)$ 24.

Die Kreuzkorrelation erfolgt in dem Ausführungsbeispiel über das Quadrat einer normierten Energie-Kreuzkorrelationsfunktion:

$$E_{KK}^2 = \frac{\left(\int_0^T y_1(t)y_2(t-\tau)dt\right)^2}{\int_0^T y_1^2(t)dt \cdot \int_0^T y_2^2(t-\tau)dt} \qquad (4)$$

Dazu werden das gefilterte Ausgangssignal $y_1(t)$ 21 und das verzögerte Vergleichssignal $y_2(t-\tau)$ 24 jeweils mit einem Multiplizierer 43, 58 quadriert, was Signale liefert, welche einer Signalleistung entsprechen. Diese Signale werden anschließend mittels der Integratoren 44, 59 über einen vorgegebenen Integrationszeitraum T integriert, so dass sich die in dem Nenner der Kreuzkorrelationsfunktion (4) gezeigten Signalenergien ergeben.

Die im Zähler der Gleichung stehende Kreuzenergie wird in dem dritten Multiplizierer 45 und dem dritten Integrator 46 aus dem gefilterten Ausgangssignal $y_1(t)$ 21 und dem verzögerten Vergleichssignal $y_2(t-\tau)$ 24 über den vorgegebenen Integrationszeitraum T gebildet.

Die Maximalwerterkennung 36 bildet aus den Signalenergien und der Kreuzenergie des gefilterten Ausgangssignals $y_1(t)$ 21 und des verzögerten Vergleichssignals $y_2(t-\tau)$ 24 entsprechend der Kreuzkorrelationsfunktion (4) die normierte Kreuzenergie $E_{KK}$ 25. Dabei verändert die Maximalwerterkennung 36 iterativ die Modelltotzeit $\tau_M$ 26 so lange, bis die normierte Kreuzenergie $E_{KK}$ 25 ihr Maximum einnimmt. Die normierte Kreuzenergie $E_{KK}$ 25 nimmt dann ihr Maximum ein, wenn das gefilterte Ausgangssignal $y_1(t)$ 21 und das verzögerte Vergleichssignal $y_2(t-\tau)$ 24 weitestgehend deckungsgleich sind. Dies ist dann der Fall, wenn die Modelltotzeit $\tau_M$ 26 der zu bestimmenden Totzeit $\tau_S$ der Breitband-Lambdasonde entspricht.

Durch die Verwendung der normierten Kreuzenergie $E_{KK}$ 25 werden multiplikative Fehler sowohl des Modells 50 wie auch des realen Systems 40, also des real vorliegenden Abgassensors 15, sowie der Einfluss des Signalhubs der Anregung eliminiert.

Der Integrationszeitraum T kann eine oder mehrere Flanken einer Änderung der Sauerstoffkonzentration des Abgases umfassen. Die Integration kann dabei zeit- oder ereignisgesteuert beginnen. Ereignisgesteuert wird die Integration beispielsweise gestartet, wenn die frühere der beiden Sauerstoffflanken (gemessen beziehungsweise simuliert) oder eine Einspritzmengenflanke einsetzt. Wird nur eine Flanke ausgewertet, ist das Diagnoseergebnis richtungsselektiv, es zählt also nur für einen Anstieg oder eine Abnahme des Sauerstoffgehalts.

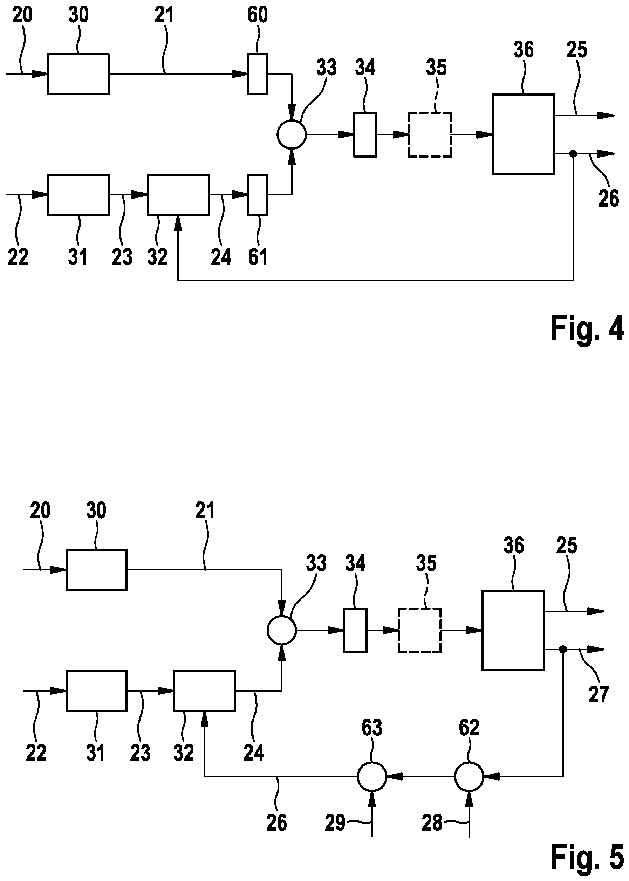

Figur 4 ein Ausführungsbeispiels der Erfindung in Form eines Blockdiagramms zur richtungsselektiven Überwachung der Totzeit $\tau_S$ eines Abgassensors 15. Die Schaltungsanordnung beziehungsweise die Softwarefunktion ist im Wesentlichen wie bereits zu Figur 2 beschrieben aufgebaut.

Zusätzlich ist nach dem ersten Hochpassfilter 30 ein erstes Sättigungsglied 60 und nach dem Totzeitglied 32 ein zweites Sättigungsglied 61 vorgesehen. Die Sättigungsglieder 60, 61 weisen eine Diodenfunktion auf, so dass sie entweder nur positive oder nur negative Signalanteile passieren lassen. Dies ermöglicht eine richtungsselektive Auswertung über mehrere gleichartige Flanken einer Änderung der zu messenden Abgaszustandsgröße, beispielsweise eines Anstiegs des Sauerstoffgehalts des Abgases.

Figur 5 zeigt ein Blockdiagramm zur Bestimmung der Totzeit $\tau_S$ eines Abgassensors 15 nach einem alternativen Auswerteverfahren. Der Aufbau entspricht wieder weitestgehend dem in Figur 2 beschriebenen Aufbau. Die Maximalwerterkennung 36 liefert in diesem Ausführungsbeispiel jedoch nicht direkt eine Modelltotzeit $\tau_M$ 26 als Ausgangssignal, sondern eine Volumenänderung $\Delta V$ 27. Die Volumenänderung wird in einem Addierer 62 zu einem Volumen V 28 addiert und das Ergebnis in einer zweiten Divisionseinheit 63 auf einen Volumenstrom v 29 bezogen, woraus sich die Modelltotzeit $\tau_M$ 26 ergibt.

Da die Totzeit $\tau_S$ des Abgassensors 15 eine Gaslaufzeit ist, hängt sie vom Volumenstrom v 29 des Abgases und von dem Volumen V 28 der Abgasanlage zwischen dem Auslass 17 der Brennkraftmaschine 10 und dem Einbauort des Abgassensors 15 ab. Die Maximalwerterkennung 36 ist daher in dem vorliegenden Ausführungsbeispiel so verändert, dass sie nicht die Modelltotzeit $\tau_M$ 26, sondern rechnerisch das Volumen V 28 entsprechend der Volumenänderung $\Delta V$ 27 gegenüber dem serienmäßigen Zustand der Abgasanlage variiert. Bei bekanntem Volumenstrom v 29 kann daraus die Modelltotzeit $\tau_M$ 26 und entsprechend die Totzeit $\tau_S$ des Abgassensors 15 bestimmt werden:

$$\tau = \frac{V + \Delta V}{v} \qquad\qquad (5)$$

## Patentansprüche

1. Verfahren zur Bestimmung einer Totzeit $\tau_S$ im Ansprechverhalten eines Abgassensors (15) zur Bestimmung einer Abgaszustandsgröße in einem Abgaskanal (18) einer Brennkraftmaschine (10), wobei die Bestimmung der Totzeit $\tau_S$ aus einem gemessenen Ausgangssignal (20) des Abgassensors (15) beziehungsweise einer daraus abgeleiteten gemessenen Kenngröße und einem Vergleichssignal (22) beziehungsweise einer daraus abgeleiteten Vergleichskenngröße erfolgt,

   wobei das gemessene Ausgangssignal (20) beziehungsweise die daraus abgeleitete gemessene Kenngröße nach einem Hochpassfilter (30) einem nachgeschalteten ersten Sättigungsglied (60) zugeführt wird, um entweder nur positive oder nur negative Signalanteile passieren zu lassen; und wobei das bestimmte Vergleichssignal (22) beziehungsweise die daraus abgeleitete Vergleichskenngröße einem Bandpassfilter (31) zugeführt wird und anschließend durch ein Totzeitglied (32) um eine Modelltotzeit $T_M$ (26) verzögert wird,
   wobei das um die Modelltotzeit $T_M$ (26) verzögerte Vergleichssignal (24) beziehungsweise die daraus abgeleitete und um die Modelltotzeit $T_M$ (26) verzögerte Vergleichskenngröße einem nachgeschalteten zweiten Sättigungsglied (61) zugeführt wird, um entweder nur positive oder nur negative Signalanteile passieren zu lassen; und wobei der Hochpassfilter (30) und der Hochpassanteil des Bandpassfilters (31) eine einheitliche Grenzfrequenz besitzen und einen Durchlassbereich, der sich mit dem Tiefpassanteil des Bandpassfilters (31) überlappt; und wobei eine richtungsselektive Bestimmung der Totzeit $\tau_S$ zwischen den Ausgängen der beiden Sättigungsglieder (60, 61) durch eine Kreuzkorrelationsfunktion über mehrere positive bzw. negative Flanken einer Änderung der Abgaszustandsgröße erfolgt; und wobei die Modelltotzeit $\tau_M$ (26) derart gewählt wird, dass die Kreuzkorrelationsfunktion ein Maximum annimmt und wobei die Totzeit $\tau_S$ des gemessenen Ausgangssignals des Abgassensors (15) der derart bestimmten Modelltotzeit $\tau_M$ (26) gleichgesetzt wird.

2. Verfahren nach Anspruch 1, **dadurch gekennzeichnet, dass** das bestimmte Vergleichssignal (22) beziehungsweise die daraus abgeleitete Vergleichskenngröße modelliert wird.

3. Verfahren nach Anspruch 1 oder 2, **dadurch gekennzeichnet, dass** als Kreuzkorrelationsfunktion eine normierte Energie-Kreuzkorrelationsfunktion oder das Quadrat einer normierten Energie-Kreuzkorrelationsfunktion verwendet wird.

4. Verfahren nach einem der Ansprüche 1 bis 3, **dadurch gekennzeichnet, dass** ein Integrationszeitraum T bei der Berechnung der Energie-Kreuzkorrelationsfunktion eine oder mehrere Flanken einer Änderung der Abgaszustandsgröße umfasst.

5. Verfahren nach Anspruch 4, **dadurch gekennzeichnet, dass** der Integrationszeitraum T zeit- oder ereignisgesteuert beginnt.

6. Verfahren nach einem der Ansprüche 1 bis 5, **dadurch gekennzeichnet, dass** zur Bestimmung des Maximums der Kreuzkorrelation ein Volumenwert des Abgaskanals (18) zwischen der Brennkraftmaschine (10) und dem Einbauort des Abgassensors (15) derart variiert wird, dass die Kreuzkorrelationsfunktion ein Maximum annimmt.

7. Verfahren gemäß einem der Ansprüche 1 bis 6 zur Bestimmung einer Totzeit $\tau_S$ im Ansprechverhalten einer Breitband-Lambdasonde oder eines $NO_x$-Sensors.

8. Verfahren gemäß einem der Ansprüche 1 bis 6 bei Hybrid-Fahrzeugen.

9. Verfahren gemäß einem der Ansprüche 1 bis 6 bei Fahrzeugen mit Segelbetrieb.

## Claims

1. Method for determining a dead time $T_S$ in the response of an exhaust gas sensor (15) for determining an exhaust gas state variable in an exhaust gas duct (18) of an internal combustion engine (10), the dead time $T_S$ being determined from a measured output signal (20) of the exhaust gas sensor (15), or a measured parameter derived therefrom, and a comparison signal (22), or a comparison parameter derived therefrom,

   wherein the measured output signal (20), or the measured parameter derived therefrom, is supplied, downstream of a high-pass filter (30), to a downstream first saturation element (60) in order to allow either only positive or only negative signal components to pass; and wherein the specific comparison signal (22), or the comparison parameter derived therefrom, is supplied to a bandpass filter (31) and is subsequently delayed by a model dead time $T_M$ (26) by a dead-time element (32),
   wherein the comparison signal (24) delayed by the model dead time $T_M$ (26), or the comparison parameter derived therefrom and delayed by the model dead time $T_M$ (26), is supplied to a downstream second saturation element (61) in order to allow either only positive or only negative signal components to pass; and
   wherein the high-pass filter (30) and the high-pass component of the bandpass filter (31) have the same cutoff frequency and a passband that overlaps the low-pass component of the bandpass filter (31); and wherein a directionally selective determination of the dead time $T_S$ is performed between the outputs of the two saturation elements (60, 61) by a cross-correlation function over multiple positive or negative edges of a change in the exhaust gas state variable; and
   wherein the model dead time $T_M$ (26) is chosen in such a way that the cross-correlation function assumes a maximum and wherein the dead time $T_S$ of the measured output signal of the exhaust gas sensor (15) is equated to the model dead time $T_M$ (26) determined in such a way.

2. Method according to Claim 1, **characterized in that** the specific comparison signal (22), or the comparison parameter derived therefrom, is modelled.

3. Method according to Claim 1 or 2, **characterized in that** the cross-correlation function used is a normalized energy cross-correlation function or the square of a normalized energy cross-correlation function.

4. Method according to one of Claims 1 to 3, **characterized in that** an integration period T for the calculation of the energy cross-correlation function comprises one or more edges of a change in the exhaust gas state variable.

5. Method according to Claim 4, **characterized in that** the integration period T starts in a time- or event-controlled manner.

6. Method according to one of Claims 1 to 5, **characterized in that** the maximum of the cross-correlation is determined by varying a volume value of the exhaust gas duct (18) between the internal combustion engine (10) and the installation location of the exhaust gas sensor (15) in such a way that the cross-correlation function assumes a maximum.

7. Method according to one of Claims 1 to 6 for determining a dead time $T_S$ in the response of a wideband lambda probe or an $NO_x$ sensor.

**8.** Method according to one of Claims 1 to 6 in hybrid vehicles.

**9.** Method according to one of Claims 1 to 6 in vehicles with coasting mode.

**Revendications**

**1.** Procédé de détermination d'un temps mort $T_S$ dans le comportement de réaction d'un capteur de gaz d'échappement (15) destiné à déterminer une grandeur d'état des gaz d'échappement dans un conduit de gaz d'échappement (18) d'un moteur à combustion interne (10), la détermination du temps mort $T_S$ s'effectuant à partir d'un signal de sortie (20) mesuré du capteur de gaz d'échappement (15) ou d'une grandeur caractéristique mesurée qui en est dérivée et d'un signal de comparaison (22) ou d'une grandeur caractéristique de comparaison qui en est dérivée,

le signal de sortie (20) mesuré ou la grandeur caractéristique mesurée qui en est dérivée étant acheminé(e), après un filtre passe-haut (30), à un premier élément de saturation (60) branché en aval afin de ne laisser passer que les composantes soit positives, soit négatives, du signal ; et le signal de comparaison (22) déterminé ou la grandeur caractéristique de comparaison qui en est dérivée étant acheminé (e) à un filtre passe-bande (31) et étant ensuite retardé d'un modèle de temps mort $T_M$ (26) par un élément de temps mort (32), le signal de comparaison (24) retardé du modèle de temps mort $T_M$ (26) ou la grandeur caractéristique de comparaison qui en est dérivée et retardée du modèle de temps mort $T_M$ (26) étant acheminé(e) à un deuxième élément de saturation (61) branché en aval, afin de ne laisser passer que les composantes soit positives, soit négatives, du signal ; et le filtre passe-haut (30) et la partie passe-haut du filtre passe-bande (31) possédant une fréquence de coupure uniforme et une bande passante qui chevauche la partie passe-bas du filtre passe-bande (31) ; et une détermination à sélectivité directionnelle du temps mort $T_S$ entre les sorties des deux éléments de saturation (60, 61) étant effectuée par une fonction de corrélation croisée sur plusieurs flancs positifs ou négatifs d'une modification de la grandeur d'état des gaz d'échappement ; et le modèle de temps mort $T_M$ (26) étant sélectionné de telle sorte que la fonction de corrélation adopte un maximum et le temps mort $T_S$ du signal de sortie mesuré du capteur de gaz d'échappement (15) étant mis à égalité avec le modèle de temps mort $T_M$ (26) ainsi déterminé.

**2.** Procédé selon la revendication 1, **caractérisé en ce que** le signal de comparaison (22) déterminé ou la grandeur caractéristique de comparaison qui en est dérivée est modélisé(e).

**3.** Procédé selon la revendication 1 ou 2, **caractérisé en ce que** la fonction de corrélation croisée utilisée est une fonction de corrélation croisée d'énergie normalisée ou le carré d'une fonction de corrélation croisée d'énergie normalisée.

**4.** Procédé selon l'une des revendications 1 à 3, **caractérisé en ce qu'**une période d'intégration T lors du calcul de la fonction de corrélation croisée d'énergie comprend un ou plusieurs flancs d'une modification de la grandeur d'état des gaz d'échappement.

**5.** Procédé selon la revendication 4, **caractérisé en ce que** le commencement de la période d'intégration T est commandé par le temps ou un événement.

**6.** Procédé selon l'une des revendications 1 à 5, **caractérisé en ce que** pour la détermination du maximum de la corrélation croisée, une valeur de volume du conduit de gaz d'échappement (18) entre le moteur à combustion interne (10) et le lieu d'installation du capteur de gaz d'échappement (15) est mise à varier de telle sorte que la fonction de corrélation croisée adopte un maximum.

**7.** Procédé selon l'une des revendications 1 à 6 de détermination d'un temps mort $T_S$ dans le comportement de réaction d'une sonde lambda à large bande ou d'un capteur de $NO_x$.

**8.** Procédé selon l'une des revendications 1 à 6 sur des véhicules hybrides.

**9.** Procédé selon l'une des revendications 1 à 6 sur des véhicules fonctionnant en mode voile.

10

11    12                    17         18              16

Fig. 1

20    30         21              33  34    35    36    25

22    31    23    32    24              26

Fig. 2

Fig. 3

EP 2 807 362 B1

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008001121 A1
- DE 102008042549 A1
- DE 102007050026 A1

**In der Beschreibung aufgeführte Nicht-Patentliteratur**

- **C. H. KNAPP ; G.C. CARTER.** The Generalized Correlation Method for Estimation of Time Delay. *IEEE Transactions on Acoustics, Speech, and Signal Processing,* August 1976, vol. ASSP-24 (4

- **TODD MESSER J et al.** Measurement Delays and Modal Analysis for a Heavy Duty Transportable Emissions Testing Laboratory. *SAE TECHNICAL PAPER 950218,* 01. Januar 1995, 87-104